# EUROPÄISCHE PATENTANMELDUNG

(11) **EP 1 857 314 A2**
(43) Veröffentlichungstag der Anmeldung: **21.11.2007**
(21) Anmeldenummer: 07009676.3
(22) Anmeldetag: 15.05.2007
(51) Int. Cl.: B60K 1/00

(54) **Fahrzeug mit einem elektrisch angetriebenen Fahrmodus**

(30) Priorität: 19.05.2006 DE 102006023871; 09.01.2007 DE 102007002080
(71) Anmelder: Baur, Lutz, 88339 Bad Waldsee (DE)
(72) Erfinder: Baur, Lutz, 88339 Bad Waldsee (DE)
(74) Vertreter: Eisele, Otten, Roth & Dobler

(57) **Zusammenfassung**

Es wird ein Fahrzeug, insbesondere Hybrid-Fahrersitz-Zugmaschine, wenigstens mit einem elektrisch angetriebenen Fahrmodus, wobei ein Elektromotor (6) zum Erzeugen einer das Fahrzeug antreibenden Antriebsenergie vorgesehen ist, wobei ein mittels einer Hydraulikflüssigkeit antreibbarer, hydraulischer Antriebsmotor (2) zum Antreiben wenigstens eines Laufrades (10) vorgesehen ist, vorgeschlagen, das im Vergleich zum Stand der Technik weniger störanfällig und/oder mit geringeren Betriebskosten betrieben werden kann. Dies wird erfindungsgemäß dadurch erreicht, dass wenigstens zwischen dem Elektromotor (6) und dem hydraulischen Antriebsmotor (2) eine die Hydraulikflüssigkeit aufweisende erste Energie-Übertragungs-Einheit (3) zum Übertragen von Energie zwischen dem Elektromotor (6) und dem Antriebsmotor (2) vorgesehen ist, so dass der hydraulische Antriebsmotor (2) vom Elektromotor (6) antreibbar ist.

## Beschreibung

Die Erfindung betrifft ein Fahrzeug, insbesondere HybridSchlepper oder Hybrid-Plattformwagen, mit einem Antriebsmotor zum Antreiben wenigstens eines Laufrades des Fahrzeugs nach dem Oberbegriff des Anspruchs 1.

Hybridfahrzeuge mit einem Verbrennungsmotor und beispielsweise einem Elektroantrieb vor allem für den gemischten Einsatz im Freien und in der Halle sind bereits seit langem gebräuchlich. Häufig ist die Antriebsart sowohl im Stand als auch während der Fahrt umschaltbar. Entsprechende Hybridfahrzeuge werden beispielsweise auf Flughäfen, insbesondere als Gepäckzugmaschine oder dergleichen, und in der Industrie in unterschiedlichsten Ausführungen eingesetzt.

Bei entsprechenden Fahrzeugen wird im Allgemeinen zwischen einem Schlepper und einem Plattformwagen unterschieden. Im Gegensatz zum Schlepper weist der Plattformwagen eine Plattform oder Ähnliches zum Aufnehmen von Gegenständen wie Gepäck, Industrieprodukte oder dergleichen auf.

Als Verbrennungsmotoren werden häufig Dieselmotoren verwendet, die im Freien in Betrieb sind, in geschlossenen Räumen wie z.B. in internen Gepäckfertigungsbereichen, Industriehallen oder dergleichen treibt der Elektroantrieb das Hybridfahrzeug an, so dass keine schädlichen Abgasemissionen die in diesen Räumen arbeitenden Personen beeinträchtigen können.

Bei entsprechenden Hybridfahrzeugen wird beispielsweise der elektrische Antriebsmotor einerseits von Batterien bzw. Akkumulatoren mit elektrischer Energie als auch mittels einem vom Verbrennungsmotor angetriebenen Generator versorgt. Limitierender Faktor ist hierbei der Elektromotor, da die Antriebsleistung verfügbarer Elektromotoren auf maximal ca. 20 KW (bei 80 V Versorgungsspannung) begrenzt ist.

Darüber hinaus sind bereits Fahrzeuge, insbesondere Nutzfahrzeuge, bekannt, wobei ein Dieselmotor mit einer Hydraulikpumpe verbunden ist und diese hydraulisch mit einem Hydraulikmotor zum Antreiben der Laufräder in Wirkverbindung steht. Entsprechende Antriebe werden vielfach in besonders großen Lastkraftwagen, sogenannten Dumpern, oder Baggern etc. eingesetzt. Vorteil bei derartigen Antrieben ist u.a., dass die große Leistung des Dieselmotors über den Hydraulikmotor an die Antriebsräder weitergeleitet wird, was bei elektromotorisch angetriebenen Fahrzeugen der oben beschriebenen Art nicht der Fall ist.

Weiterhin sind bereits hydraulisch angetriebene Fahrzeuge, insbesondere Hybridschlepper oder Hybridplattformwagen der oben genannten Art, bekannt, wobei der Dieselmotor einerseits über eine Hydraulikpumpe und Hydraulikschläuchen einen Hydraulikmotor und andererseits über einen Elektrogenerator und elektrischen Leitungen einen Elektromotor antreibt, die jeweils separat Antriebs- bzw. Laufräder antrieben. Der Elektromotor ist dementsprechend parallel zum hydraulischen Kreis/Motor geschaltet und kann im Elektrofahrbetriebsmodus durch eine Elektrobatterie/-Akku betrieben werden.

Bei derartigen Fahrzeugen mit Verbrennungsmotor, insbesondere Dieselmotor, Hydraulikantriebsmotor und Elektromotor mit elektrischer Batterie, werden bislang zum Betreiben bzw. Stilllegen der einzelnen Komponenten Kupplungen zum An- oder Abkuppeln dieser Komponenten verwendet. Es hat sich jedoch in der Praxis gezeigt, dass derartige Kupplungen starker mechanischer Beanspruchung unterliegen und daher besonders verschleiß- und wartungsanfällig sind und somit zu hohen Betriebskosten als auch zu häufigen Ausfällen der entsprechenden Fahrzeuge führen.

Aufgabe der Erfindung ist es demgegenüber, ein Fahrzeug, insbesondere Hybrid-Fahrersitz-Zugmaschine, mit einem elektrisch angetriebenen Fahrmodus, wobei ein Elektromotor zum Erzeugen einer das Fahrzeug antreibenden Antriebsenergie vorgesehen ist, wobei ein mittels einer Hydraulikflüssigkeit antreibbarer, hydraulischer Antriebsmotor zum Antreiben wenigstens eines Laufrades vorgesehen ist, vorzuschlagen, das im Vergleich zum Stand der Technik weniger störanfällig ist und/oder mit geringeren Betriebskosten und/oder in neuartigen Betriebsmodi betrieben werden kann.

Dementsprechend zeichnet sich ein erfindungsgemäßes Fahrzeug dadurch aus, dass wenigstens zwischen dem Elektromotor und dem hydraulischen Antriebsmotor eine die Hydraulikflüssigkeit aufweisende erste Energie-Übertragungs-Einheit zum Übertragen von Energie zwischen dem Elektromotor und dem Antriebsmotor vorgesehen ist, so dass der hydraulische Antriebsmotor vom Elektromotor antreibbar ist. Gemäß der Erfindung kann in einem Betriebsmodus die elektrische Energie des Elektromotors zum Antrieben des Hydraulikmotors und somit zum Antreiben des Fahrzeugs verwendet werden. Dies bedeutet, dass in einem erfindungsgemäßen Betriebsmodus der Elektromotor und der Hydraulikmotor in Serie verschalten sind. Hierdurch ergeben sich völlig neue Möglichkeiten für den Betrieb eines Fahrzeugs gemäß der Erfindung.

Darüber hinaus kann auch auf die Verwendung von störungsanfälligen mechanischen Kupplungen zur Energieübertragung bzw. deren Unterbrechung verzichtet werden. Dies verbessert die Wirtschaftlichkeit bzw. erhöht die Betriebssicherheit des erfindungsgemäßen Fahrzeugs.

Vorzugsweise ist wenigstens ein die Hydraulikflüssigkeit aufweisender erster Energie-Wandler zum Umwandeln der Elektromotorenergie und der hydraulischen Antriebsmotorenergie vorgesehen. Hiermit wird erreicht, dass unmittelbar elektrische und hydraulische Energie zwischen den beiden beteiligten Komponenten austauschbar ist. Einerseits kann es sich beim ersten Energie-Wandler um eine Hydraulik-Pumpe handeln, so dass in vorteilhafter Weise die Energie des Elektromotors in hydraulische Energie bzw. hydraulischen Druck umgewandelt werden kann und hiermit der hydraulische Antriebsmotor antreibbar ist.

Generell wird im Sinn der Erfindung unter Pumpe ein Energiewandler verstanden, der eine ihm zugeführte Energie, wie z.B. elektrische oder Bewegungsenergie, in Hydraulikenergie bzw. Druckenergie bzw. Druck eines Fluids, insbesondere der Hydraulikflüssigkeit, umwandelt. Entsprechend wird unter einem Motor im Sinn der Erfindung eine Maschine verstanden, die eine Energieform, insbesondere eine Hydraulikenergie, in vorzugsweise rotatorische Bewegungsenergie umwandelt.

Andererseits kann der erste Energie-Wandler als Hydraulik-Motor ausgebildet werden, so dass hydraulische Energie bzw. ein hydraulischer Druck in Bewegungsenergie bzw. in Antriebsenergie für den Elektromotor umwandelbar ist.

Vorteilhafterweise ist der hydraulische Antriebsmotor als Hydraulik-Pumpe betreibbar. Dementsprechend kann hiermit beispielsweise eine Rekuperation verwirklicht werden. Dies bedeutet, dass Bremsenergie mittels des hydraulischen Antriebsmotors und des ersten Energie-Wandlers bzw. Hydraulik-Motors in elektrische Energie umwandelbar und vorzugsweise mit Hilfe eines elektrischen Speichers speicherbar ist, insbesondere zum Antrieben des Fahrzeugs im elektrisch angetriebenen Fahrmodus und/oder zum Betreiben beliebiger elektrischer Fahrzeugkomponenten, wie z.B. Starter, Radio, Scheibenwischer, Licht etc..

In einer besonderen Weiterbildung der Erfindung ist der erste Energie-Wandler als erste Hydraulik-Pumpe-Motor-Einheit ausgebildet. Das bedeutet, dass der erste Energie-Wandler als eine einzige Baueinheit sowohl als Motor als auch als Pumpe ausgebildet wird. Dementsprechend kann dieser beide Funktionen realisieren, was zur Verringerung der notwendigen Komponenten führen kann.

Vorteilhafterweise ist wenigstens eine Verbrennungskraftmaschine, insbesondere ein Dieselmotor, zum Erzeugen der das Fahrzeug antreibenden Antriebsenergie vorgesehen, so dass das Fahrzeug als Hybrid-Fahrzeug betreibbar ist. Mit Hilfe einer Verbrennungskraftmaschine ist eine vergleichsweise hohe Leistungs- bzw. Energiedichte realisierbar, was insbesondere sowohl für die Energieerzeugung als auch für die Energiespeicherung des Kraftstoffs "on Bord" zutrifft.

Vorzugsweise ist wenigstens zwischen der Verbrennungskraftmaschine und dem hydraulischen Antriebsmotor eine die Hydraulikflüssigkeit aufweisende zweite Energie-Übertragungs-Einheit zum Übertragen von Energie zwischen der Verbrennungskraftmaschine und dem Antriebsmotor angeordnet. Hiermit wird erreicht, dass die vergleichsweise große Energie bzw. Leistung der Verbrennungskraftmaschine auf den hydraulischen Antriebsmotor und somit auf die Antriebsräder direkt übertragbar ist, was zu vorteilhaften Eigenschaften des Fahrzeugs führt.

Vorteilhafterweise ist wenigstens ein die Hydraulikflüssigkeit aufweisender zweiter Energie-Wandler zum Umwandeln der Energie der Verbrennungskraftmaschine und der hydraulischen Antriebsmotorenergie vorgesehen. Hiermit wird erreicht, dass unmittelbar Verbrennungs- bzw. Bewegungsenergie und hydraulische Energie zwischen den beiden beteiligten Komponenten austauschbar ist. Einerseits kann es sich beim zweiten Energie-Wandler um eine Hydraulik-Pumpe handeln, so dass in vorteilhafter Weise die Energie der Verbrennungskraftmaschine in hydraulische Energie bzw. hydraulischen Druck umgewandelt werden kann und hiermit der hydraulische Antriebsmotor antreibbar ist.

Andererseits kann der zweite Energie-Wandler als Hydraulik-Motor ausgebildet werden, so dass hydraulische Energie bzw. ein hydraulischer Druck in Bewegungsenergie bzw. in Antriebsenergie für die Verbrennungskraftmaschine umwandelbar ist. Somit kann die Verbrennungskraftmaschine mittels hydraulischer Energie gestartet werden, was in vorteilhafter Weise einen gegebenenfalls notwendigen separaten Starter bzw. Anlasser entbehrlich macht.

Insbesondere ist der zweite Energie-Wandler als zweite Hydraulik-Pumpe-Motor-Einheit ausgebildet. Das bedeutet, dass der zweite Energie-Wandler als eine einzige Baueinheit sowohl als Motor als auch als Pumpe ausgebildet wird. Dementsprechend kann dieser beide Funktionen realisieren, was zur Verringerung der vorzusehenden Komponenten führen kann.

In einer vorteilhaften Variante der Erfindung ist wenigstens zwischen dem Elektromotor und der Verbrennungskraftmaschine eine die Hydraulikflüssigkeit aufweisende dritte Energie-Übertragungs-Einheit zum Übertragen von Energie zwischen dem Elektromotor und der Verbrennungskraftmaschine vorgesehen. Vorzugsweise ist wenigstens ein die Hydraulikflüssigkeit aufweisender dritter Energie-Wandler zum Umwandeln der Energie der Verbrennungskraftmaschine und der Elektromotorenergie vorgesehen. Es ist von Vorteil, den dritten Energie-Wandler als dritte Hydraulik-Pumpe-Motor-Einheit auszubilden. Entsprechend kann in vorteilhafter Weise Energie zwischen diesen beiden Komponenten ausgetauscht werden.

In einer besonderen Weiterbildung der Erfindung ist der dritte Energie-Wandler bzw. die dritte Hydraulik-Pumpe-Motor-Einheit als zweiter Energie-Wandler bzw. als zweite Hydraulik-Pumpe-Motor-Einheit ausgebildet, so dass die Anzahl der verwendeten Komponenten relativ gering ist.

Vorzugweise ist ein elektrischer Generator zur Erzeugung elektrischer Energie zum Zwischenspeichern in einer elektrischen Speichereinheit vorgesehen. Insbesondere ist der Elektromotor als der elektrische Generator ausgebildet, was zu einer Mehrfachnutzung und somit zu einer Aufwandsreduzierung führt.

In einer bevorzugten Variante der Erfindung ist eine Steuereinheit zur Steuerung der Verbrennungskraftmaschine und/oder des Elektromotors und/oder des hydraulischen Antriebsmotors und/oder des elektrischen Generators vorgesehen. Hiermit können unterschiedlichste Betriebsmodi verwirklicht werden.

Vorteilhafterweise ist die Steuereinheit als hydraulische Steuereinheit mit wenigstens einem Steuerventil zur Veränderung des Hydraulikstromes ausgebildet. Steuerventile oder dergleichen können in vorteilhafter Weise die jeweiligen Hydraulikströme zwischen den jeweiligen Komponenten kontrollieren bzw. dosieren. Gemäß der Erfindung kann somit auf wartungs- und/oder störungsanfällige mechanische Steuermittel wie Kupplungen oder dergleichen weitestgehend verzichtet werden.

In dem Fall, dass das Steuerventil als Dosierventil zur Dosierung des Hydraulikstromes ausgebildet ist, können die jeweiligen Hydraulikströme ganz besonders vorteilhaft bzw. genau gesteuert bzw. dosiert werden.

Vorzugsweise ist die hydraulische Steuereinheit zum Steuern des Hydraulikstromes der ersten Energie-Übertragungs-Einheit und/oder der zweiten Energie-Übertragungs-Einheit und/oder der dritten Energie-Übertragungs-Einheit ausgebildet. Entsprechend vorteilhaft ist das gesamte System steuerbar.

Vorteilhafterweise ist wenigstens ein Steuermittel zum Steuern bzw. Inbetriebsetzen oder Stilllegen des Verbrennungsmotors und/oder Hydraulikmotors und/oder des elektrischen Generators als Steuerventil ausgebildet. Mit Hilfe derartiger Steuerventile können in vorteilhafter Weise die hydraulischen Verbindungen bzw. Leitungen zwischen den entsprechenden Komponenten freigeschaltet und/oder abgeschaltet bzw. gesperrt werden.

Beispielsweise sind die Steuerventile als Dosierventile ausgebildet, womit in vorteilhafter Weise die Durchflussmenge bzw. das durchfließende Hydraulikmedium, insbesondere Hydrauliköl, dosierbar ist. Hierdurch wird erreicht, dass durch die Steuermittel in vorteilhafter Weise eine Geschwindigkeitssteuerung des Fahrzeugs und/oder einer Steuerung der Energie bzw. eine Energieverteilung, beispielsweise mit unterschiedlichen bzw. variablen Anteilen für die einzelnen Komponenten verwirklichbar ist.

Ein Ausführungsbeispiel ist in der Zeichnung dargestellt und wird anhand der Figuren nachfolgend näher erläutert.

Im Einzelnen zeigt:
- Figur 1: ein Blockschaltbild eines ersten Antriebssystems eines erfindungsgemäßen Fahrzeugs,
- Figur 2: ein Blockschaltbild eines zweiten Antriebssystems eines erfindungsgemäßen Fahrzeugs und
- Figur 3: ein Blockschaltbild eines dritten Antriebssystems eines erfindungsgemäßen Fahrzeugs.

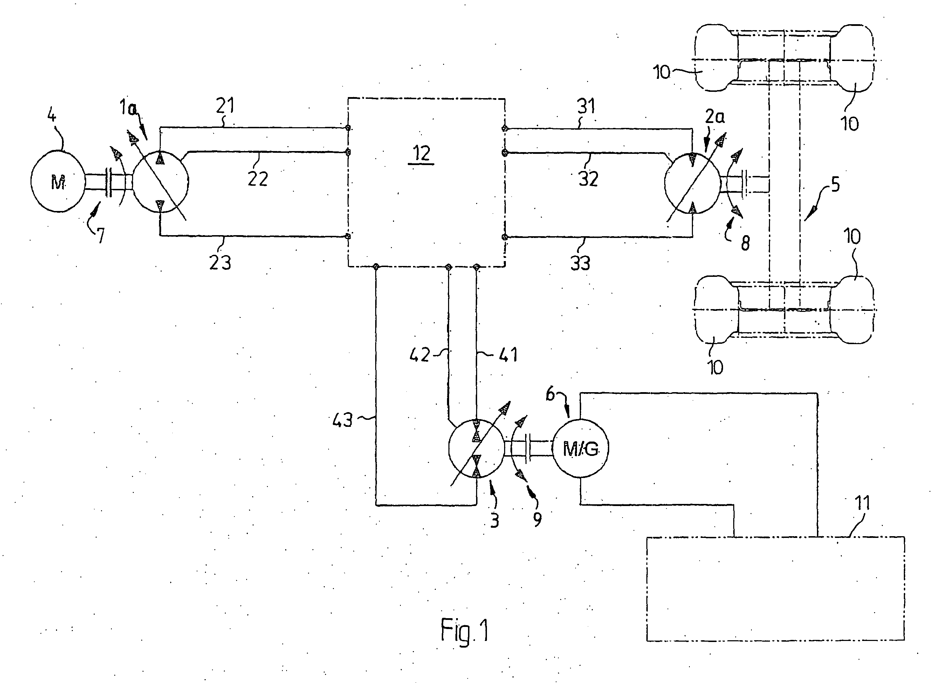

In der schematischen Figur 1 ist ein Verbrennungsmotor 4 als Dieselmotor 4 abgebildet, der vorzugsweise über eine über ein Gummielement oder dergleichen nicht schaltbare Kupplung 7 eine erste hydraulische Einheit 1 bzw. eine Hydraulikpumpe 1a antreibt, die in vorteilhafter Weise in eine Drehrichtung wirkt. Diese erste hydraulische Einheit 1a treibt u.a. eine dritte hydraulische Einheit 2 bzw. einen Hydraulikmotor 2a an, der vorzugsweise über eine über ein Gummielement oder dergleichen nicht schaltbare Kupplung 8 bzw. über eine Achse 5, insb. Differentialachse 5, mit Laufrädern 10 verbunden ist und diese zum Vorwärts- oder Rückwärtsbewegen des Fahrzeugs antreibt. Dementsprechend wirkt dieser Hydraulikmotor 2 gemäß dem dargestellten Doppelpfeil in zwei entgegengesetzte Drehrichtungen.

Parallel zu hydraulischen Steuerleitungen 21, 22, 23, 31, 32, 33 zwischen der Hydraulikpumpe 2a und dem Hydraulikmotor 1a ist eine zweite hydraulische Einheit 3 bzw. eine Hydraulik-Motor-Pumpe 3 vorgesehen, die sowohl als hydraulische Pumpe oder als hydraulischer Motor betrieben werden kann. Diese zweite hydraulische Einheit 3 treibt über eine über ein Gummielement oder dergleichen nicht schaltbare Kupplung 9 einen elektrischen Generator 6 an, der die erzeugte elektrische Energie mittels einer Traktionsbatterie 11 zwischenspeichern kann.

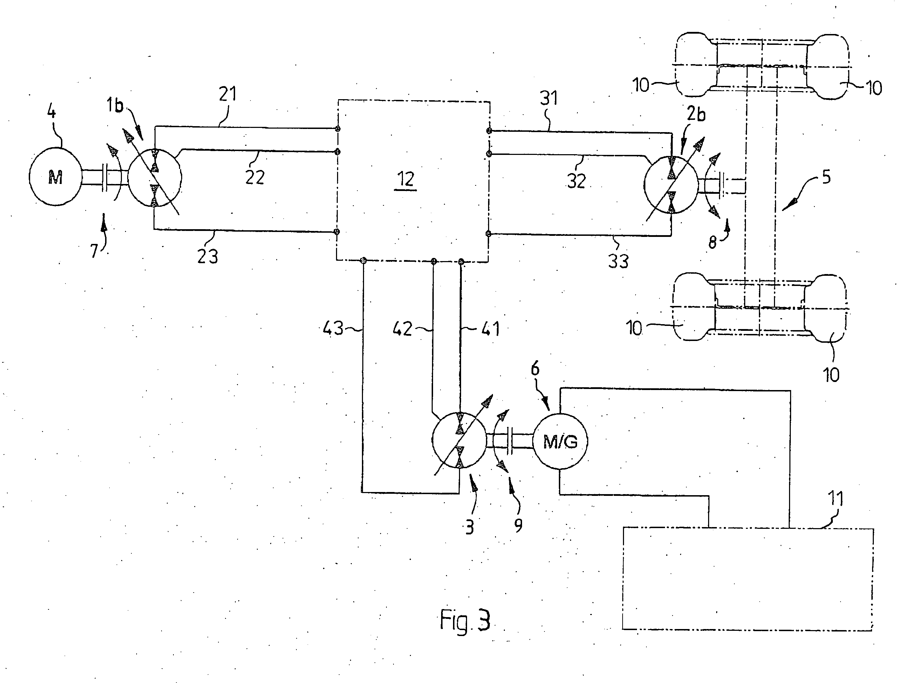

Der elektrische Generator 6 ist auch als elektrischer Motor 6 (vorzugsweise als Asynchronmaschine ausgebildet) verwendbar, der aus der Energie der Traktionsbatterie 11 versorgt wird und in diesem Fall die zweite hydraulische Einheit 3 als hydraulische Pumpe 3 verwendet, wodurch ein hydraulischer Druck in den entsprechenden hydraulischen Leitungen 41, 42, 43, 31, 32, 33, 21, 22, 23 erzeugt wird. Diese hydraulische Energie kann beispielsweise gemäß der Variante aus Figur 3 über die erste hydraulische Einheit 1, in diesem Fall als hydraulischer Motor 1b, zum Starten des Dieselmotors 4 verwendet werden. Dementsprechend wirkt dieser Elektrogenerator bzw. -motor 2b gemäß dem dargestellten Doppelpfeil in zwei entgegengesetzte Drehrichtungen.

Darüber hinaus kann bei Verwendung der elektrischen Generatoreinheit 6 als Elektromotor 6 auch die zweite hydraulische Einheit 3 zum Erzeugen eines hydraulischen Druckes für den Hydraulikmotor 2a, 2b zum Antreiben der Laufräder 10 verwendet werden.

Zum Betreiben des Fahrzeugs mit hoher Leistung wird vorzugsweise der Dieselmotor 4 zum Erzeugen der Antriebsleistung verwendet und hierbei die erste hydraulische Einheit 1 als Hydraulikpumpe 1a, 1b zum Erzeugen des hydraulischen Drucks für den Hydraulikmotor 2b verwendet.

Darüber hinaus kann der Dieselmotor 4 über die erste hydraulische Einheit 1 als hydraulische Pumpe 1a, 1b zum Erzeugen elektrischer Energie über den Elektrogenerator 6 für die Traktionsbatterie 11 verwendet werden.

Ein entsprechendes Fahrzeug kann sowohl vorzugsweise im Außenbereich bei laufendem Dieselmotor 4 mit hoher Antriebsleistung betrieben werden, ohne dass die Traktionsbatterie 11 beansprucht bzw. entladen wird. Es kann sogar sowohl mit der Leistung des Dieselmotors 4 als auch über den Elektromotor 6 zusätzlich betrieben werden, der vorzugsweise mit der Energie bzw. Leistung der Traktionsbatterie 11 versorgt wird.

Andererseits kann ein entsprechendes Fahrzeug bei ausgeschaltetem Dieselmotor 4 mit Hilfe des Elektrogenerators 6, der in diesem Fall als Elektromotor 6 genutzt wird, mit elektrischer Energie aus der Traktionsbatterie 11 im reinen Elektrobetrieb angetrieben werden, was insbesondere in geschlossenen Räumen notwendig ist.

Eine Steuerung 12, insbesondere als elektrohydraulischer Ventilblock 12 ausgebildet, erfolgt über nicht näher dargestellte Ventile, die vorzugsweise als Dosierventile ausgebildet sind. Mit Hilfe einer entsprechenden elektronischen Kontrolleinheit können diese Ventile bzw. die Steuerung 12 in vorteilhafter Weise so kontrolliert werden, dass sowohl die Geschwindigkeit als auch unterschiedlichste Betriebsarten in vorteilhafter Weise realisierbar sind.

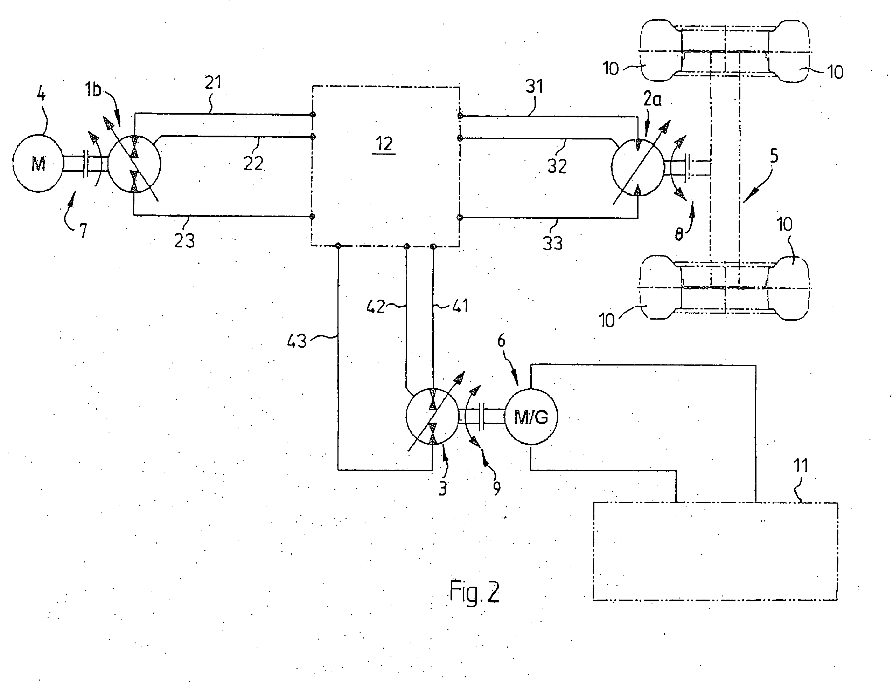

Bei den beiden Varianten gemäß Figur 1 oder 2 ist die Einheit 2 lediglich als Pumpe 2a und nicht zugleich gemäß Variante der Figur 3 als Motor 2b realisiert. Zudem ist im Unterschied zu den beiden Figuren 2 und 3 bei der Variante gemäß Figur 1 die Einheit 1 lediglich als Pumpe 2a und nicht zugleich als Motor 2b realisiert. Entsprechend können in Abhängigkeit der jeweiligen Variante nachfolgend näher erläuterte Funktionen realisiert werden:
Bei der Variante gemäß Figur 1 erfolgt der Start des Dieselmotors 4 vorzugsweise über einen am Dieselmotor 4 angebauten, verstärkten und nicht näher dargestellten Anlasser.

Im Diesel-Fahrmodus wird über den Dieselmotor 4 mittels der Pumpe 1a, 1b der Hydraulikmotor 2a, 2b angetrieben. Falls der Dieselmotor 4 überschüssige Energie bzw. Leistung erzeugen kann, kann mit Hilfe des Hydraulikmotors 3 und somit mittels dem Generator 6 die Traktionsbatterie 11 geladen werden.

Im reinen Elektrobetriebsmodus wird der Hydraulikmotor 2a, 2b durch die elektrische Energie bzw. Leistung der Traktionsbatterie 11 über den Elektromotor 6 und die Hydraulikpumpe 3 hydraulisch angetrieben.

Die beiden zuvor genannten Fahrmodi können auch gemäß der Erfindung gemeinsam bzw. zeitgleich erfolgen, so dass ein Kombi-Modus realisiert ist, bei dem sich die Leistungen des Dieselmotors 4 und des Elektromotors 6 addieren können. Gerade hier wird auch ein bedeutsamer Vorteil der Erfindung besonders deutlich. Eine spezielle Steuerung bzw. ein Abgleich der beiden Antriebsarten Diesel oder elektrisch, z.B. in Bezug auch Gleichlauf etc., ist nicht notwendig. Hier setzt das Hydrauliksystem eine Abgleich ohne jeglichen Aufwand um.

Weiterhin kann bei stehendem Fahrzeug über den Dieselmotor 4 und der Pumpe 1a, 1b sowie dem Hydraulikmotor 3 und dem Generator 6 auch die Traktionsbatterie 11 geladen werden.

Bei der zweiten Variante gemäß Figur 2 kann der Start des Dieselmotors 4 vorzugsweise mit Hilfe dem Elektromotor 6 bzw. der Hydraulikpumpe 3 erfolgen. Ein separater bzw. zusätzlicher Anlasser wie bei der Variante gemäß Figur 1 ist nicht erforderlich.

Generell kann der Dieselmotor 4 sowohl im Stand als auch während der Fahrt gestartet werden. Bei einem Start des Dieselmotors 4 während der Fahrt im Elektrofahrmodus reduziert langsam die Pumpe 3 ihr dem Hydraulikmotor 2a, 2b zuströmendes Fördervolumen. Das/die zum Antrieb nicht benötigte bzw. nicht zugeteilte Fördervolumen bzw. Leistung wird mittels der Steuerung 12 dem Hydraulikmotor 1a, 1b zum Antrieben des Dieselmotors 4 zugeführt bzw. zugeteilt. Mit diesem Förderstrom kann der Dieselmotor 4 angelassen werden.

Die restlichen Betriebsmodi entsprechen im Wesentlichen den zur Varianten gemäß Figur 1 beschriebenen.

Bei der dritten Variante gemäß Figur 3 wird eine im Vergleich zur Variante gemäß Figur 2 weitere vorteilhafte Funktionalität realisierbar. Mit Hilfe der Ausbildung der Einheit 2 als Hydraulik-Motor-Pumpe-Einheit 2b kann nicht nur in den oben genannten Betriebsmodi die Antriebsräder bzw. Laufräder 10 elektrisch und/oder dieselkraftbetrieben angetrieben werden, sondern Fahrenergie kann rekuperiert werden. Beispielsweise im Bremsmodus kann die Bremsenergie bzw. die Verzögerungsenergie über die Hydraulik-Motor-Pumpe-Einheit 2b hydraulisch an den Dieselmotor 4 und/oder an den Elektrogenerator 6 bzw. die Traktionsbatterie 11 geleitet werden. Somit kann die Bremsenergie in der Traktionsbatterie 11 gespeichert und unter Umständen auch der Dieselmotor 4 gestartet werden. Die umsetzbare Rekuperation ermöglicht einen besonders sparsamen Umgang mit Energie.

Großer Vorteil der Erfindung ist, dass unter anderem die große Leistung des Verbrennungsmotors bzw. Dieselmotors vor allem im Außenbereich auf die Laufräder übertragen werden kann und hierbei keine verschleiß- und wartungsanfälligen Kupplungen, wie beim Stand der Technik verwendet, vorzusehen sind.

Weiterhin können im Wesentlichen sämtliche Umschaltvorgänge während der Fahrt ruckfrei bzw. stoßfrei in jeder Geschwindigkeit und bei jeder Last geschaltet werden.

Grundsätzlich ist die Erfindung bei Flurförderzeugen wie Hybrid-Fahrersitz-Zugmaschine oder dergleichen gemäß VDI-Richtlinie VDI 3586 (Stand: März 1996) von ganz besonderem Vorteil.

### Bezugszeichenliste:

- 1: Einheit
- 2: Einheit
- 3: Einheit
- 4: Dieselmotor
- 5: Differentialachse
- 6: Elektromotor
- 7: Kupplung
- 8: Kupplung
- 9: Kupplung
- 10: Laufrad
- 11: Batterie
- 12: Steuerung
- 21: Steuerleitung
- 22: Steuerleitung
- 23: Steuerleitung
- 31: Steuerleitung
- 32: Steuerleitung
- 33: Steuerleitung
- 41: Steuerleitung
- 42: Steuerleitung
- 43: Steuerleitung

## Patentansprüche

1. Fahrzeug, insbesondere Hybrid-Fahrersitz-Zugmaschine, wenigstens mit einem elektrisch angetriebenen Fahrmodus, wobei ein Elektromotor (6) zum Erzeugen einer das Fahrzeug antreibenden Antriebsenergie vorgesehen ist, wobei ein mittels einer Hydraulikflüssigkeit antreibbarer, hydraulischer Antriebsmotor (2) zum Antreiben wenigstens eines Laufrades (10) vorgesehen ist, **dadurch gekennzeichnet, dass** wenigstens zwischen dem Elektromotor (6) und dem hydraulischen Antriebsmotor (2) eine die Hydraulikflüssigkeit aufweisende erste Energie-Übertragungs-Einheit (3) zum Übertragen von Energie zwischen dem Elektromotor (6) und dem Antriebsmotor (2) vorgesehen ist, so dass der hydraulische Antriebsmotor (2) vom Elektromotor (6) antreibbar ist.

2. Fahrzeug nach Anspruch 1, **dadurch gekennzeichnet, dass** wenigstens ein die Hydraulikflüssigkeit aufweisender erster Energie-Wandler (3) zum Umwandeln der Elektromotorenergie und der hydraulischen Antriebsmotorenergie vorgesehen ist.

3. Fahrzeug nach einem der vorgenannten Ansprüche, **dadurch gekennzeichnet, dass** der erste Energie-Wandler (3) als erste Hydraulik-Pumpe-Motor-Einheit (3) ausgebildet ist.

4. Fahrzeug nach einem der vorgenannten Ansprüche, **dadurch gekennzeichnet, dass** wenigstens eine Verbrennungskraftmaschine (4) zum Erzeugen der das Fahrzeug antreibenden Antriebsenergie vorgesehen ist, so dass das Fahrzeug als Hybrid-Fahrzeug betreibbar ist.

5. Fahrzeug nach einem der vorgenannten Ansprüche, **dadurch gekennzeichnet, dass** wenigstens zwischen der Verbrennungskraftmaschine (4) und dem hydraulischen Antriebsmotor (2) eine die Hydraulikflüssigkeit aufweisende zweite Energie-Übertragungs-Einheit (1) zum Übertragen von Energie zwischen der Verbrennungskraftmaschine (4) und dem Antriebsmotor (2) angeordnet ist.

6. Fahrzeug nach einem der vorgenannten Ansprüche, **dadurch gekennzeichnet, dass** wenigstens ein die Hydraulikflüssigkeit aufweisender zweiter Energie-Wandler (1) zum Umwandeln der Energie der Verbrennungskraftmaschine (4) und der hydraulischen Antriebsmotorenergie vorgesehen ist.

7. Fahrzeug nach einem der vorgenannten Ansprüche, **dadurch gekennzeichnet, dass** der zweite Energie-Wandler (1) als zweite Hydraulik-Pumpe-Motor-Einheit (1) ausgebildet ist.

8. Fahrzeug nach einem der vorgenannten Ansprüche, **dadurch gekennzeichnet, dass** wenigstens zwischen dem Elektromotor (6) und der Verbrennungskraftmaschine (4) eine die Hydraulikflüssigkeit aufweisende dritte Energie-Übertragungs-Einheit (1, 3) zum Übertragen von Energie zwischen dem Elektromotor (6) und der Verbrennungskraftmaschine (4) vorgesehen ist.

9. Fahrzeug nach einem der vorgenannten Ansprüche, **dadurch gekennzeichnet, dass** wenigstens ein die Hydraulikflüssigkeit aufweisender dritter Energie-Wandler zum Umwandeln der Energie der Verbrennungskraftmaschine und der Elektromotorenergie vorgesehen ist.

10. Fahrzeug nach einem der vorgenannten Ansprüche, **dadurch gekennzeichnet, dass** der dritte Energie-Wandler (1, 3) als dritte Hydraulik-Pumpe-Motor-Einheit (1, 3) ausgebildet ist.

11. Fahrzeug nach einem der vorgenannten Ansprüche, **dadurch gekennzeichnet, dass** ein elektrischer Generator (6) zur Erzeugung elektrischer Energie zum Zwischenspeichern in einer elektrischen Speichereinheit (11) vorgesehen ist.

12. Fahrzeug nach einem der vorgenannten Ansprüche, **dadurch gekennzeichnet, dass** eine Steuereinheit (12) zur Steuerung der Verbrennungskraftmaschine (4) und/oder des Elektromotors (6) und/oder des hydraulischen Antriebsmotors (2) und/oder des elektrischen Generators (6) vorgesehen ist.

13. Fahrzeug nach einem der vorgenannten Ansprüche, **dadurch gekennzeichnet, dass** die Steuereinheit (12) als hydraulische Steuereinheit (12) mit wenigstens einem Steuerventil zur Veränderung des Hydraulikstromes ausgebildet ist.

14. Fahrzeug nach einem der vorgenannten Ansprüche, **dadurch gekennzeichnet, dass** das Steuerventil als Dosierventil zur Dosierung des Hydraulikstromes ausgebildet ist.

15. Fahrzeug nach einem der vorgenannten Ansprüche, **dadurch gekennzeichnet, dass** die hydraulische Steuereinheit (12) zum Steuern des Hydraulikstromes der ersten Energie-Übertragungs-Einheit (3) ausgebildet ist.

16. Fahrzeug nach einem der vorgenannten Ansprüche, **dadurch gekennzeichnet, dass** die hydraulische Steuereinheit (12) zum Steuern des Hydraulikstromes der zweiten Energie-Übertragungs-Einheit (1) ausgebildet ist.

17. Fahrzeug nach einem der vorgenannten Ansprüche, **dadurch gekennzeichnet, dass** die hydraulische Steuereinheit (12) zum Steuern des Hydraulikstromes der dritten Energie-Übertragungs-Einheit (1, 3) ausgebildet ist.
